# EUROPÄISCHE PATENTSCHRIFT

(11) **EP 0 437 685 B1**
(45) Veröffentlichungstag und Bekanntmachung des Hinweises auf die Patenterteilung: **10.08.1994**
(21) Anmeldenummer: 90120622.7
(22) Anmeldetag: 27.10.1990
(51) Int. Cl.: B01D 46/00, F01N 3/02, B01D 39/20

(54) **Russfilter**
Soot filter
Filtre à suie

(30) Priorität: 18.12.1989 DE 3941698
(43) Veröffentlichungstag der Anmeldung: 24.07.1991
(73) Patentinhaber: MERCEDES-BENZ AG, 70327 Stuttgart (DE)
(72) Erfinder: Krämer, Johann, Dr.-Ing., W-7250 Leonberg (DE); Renz, Rainer, Dr.-Ing., W-7000 Stuttgart (DE); Thiemann, Karl-Heinz, Ing., W-7054 Korb (DE); Smarsly, Wilfried, Dr., 8011 Grasbrunn (DE)

(56) Entgegenhaltungen:
- EP-A- 0 057 848
- CH-A- 602 934
- CH-A- 604 825
- DE-A- 2 155 955

## Beschreibung

Die Erfindung betrifft einen Rußfilter zur Abscheidung von Partikeln aus den Abgasen einer Brennkraftmaschine gemäß den weiteren im Oberbegriff des Patentanspruchs 1 angegebenen Merkmalen.

Aus der CH-PS 602 934 ist ein Filter bekannt, das aus einem metallischen Werkstoff intermetallischer Phase NiAl oder Ni₃Al besteht und zur Abtrennung von festen Stoffen aus einem gasförmigen Stoff dient. Dabei wird das Filter durch Sintern der pulverförmig vorliegenden Werkstoffe NiAl oder Ni₃Al hergestellt. Ein derartiger Filterblock besitzt jedoch einen hohen Innenwiderstand mit einem hieraus resultierenden hohen Gasgegendruck auf der Filteranströmseite.
Hoher Gasgegendruck ist jedoch bei Brennkraftmaschinen unerwünscht, da hierdurch deren Leistung beeinträchtigt wird, weshalb derartige Filter als Rußfilter kaum geeignet sind.

Ferner ist aus der EP 0 331 885 A1 ein Rußfilter mit einem Filterkörper bekannt, der aus einem formgepreßten und anschließend gesinterten Metalldraht besteht.

Von Nachteil bei derartigen metallischen Rußfiltern ist dabei, daß der Filterkörper aus temperaturbeständigen, meist chromhaltigen Legierungen besteht, welche durch den Chromgehalt zur Versprödung durch Aufkohlung und Chrom-Karbidbildung neigen. Im Filter kann es dadurch zu Rißbildungen kommen, die den Abscheidegrad verschlechtern. Ein weiterer Nachteil des Materials ist die nicht ausreichende Beständigkeit der Legierung gegen im Abgas enthaltenen Schwefel im Hochtemperaturbereich.

Der Erfindung liegt die Aufgabe zugrunde, das gattungsgemäße Filter für den Einsatz als Rußfilter an einer Brennkraftmaschine so zu verbessern, daß es einerseits ohne Beeinträchtigung des Abscheidegrades einen verhältnismäßig geringen Innenwiderstand und andererseits eine ausreichende Festigkeit im Dauerbetrieb aufweist.

Die Aufgabe wird erfindungsgemäß durch die kennzeichnenden Merkmale des Patentanspruchs 1 gelöst.

Als Werkstoff für poröse metallische Rußfilter bzw. Rußabbrennfilter kommt ein Material intermetallischer Phase zum Einsatz. Ein derartiges Material ist auch bei hohen Temperaturen chemisch sehr beständig. Durch die fehlenden Karbidbildner im Material ist auch keine Aufkohlungsneigung vorhanden, so daß eine Versprödung des Materials und damit die Gefahr einer Rißbildung ausgeschlossen ist. Geeignete Materialien intermetallischer Phase sind hierbei Ni₃Al oder NiAl. Durch ihre hohe Schmelztemperatur und gute Korrosionsbeständigkeit sind sie als poröse Filterwerkstoffe zur Abscheidung von Partikeln, insbesondere Rußpartikeln, aus den Abgasen einer Brennkraftmaschine besonders günstig. Darüberhinaus weisen sie eine hohe Wärmeleitfähigkeit, einen geringen thermischen Ausdehnungskoeffizienten und eine mit steigender Temperatur steigende Streckgrenze auf, welche Merkmale zu einem guten Thermoschockverhalten führen.

Diese Ausgangsmaterialien sind zu einem porösen Sinterkörper aus Drahtgeflecht verarbeitet. Durch die relativ starke Oxidschichtbildung und aufgrund der geringen Diffusionsneigung der genannten Werkstoffe muß ihre Sinterfähigkeit jedoch durch die Zumischung oder Zulegierung von weiteren Metallen oder Metallgemischen, wie z.B. Al, Ni, Ta, Nb, TeLa usw., verbessert werden. Dies geschieht dadurch, daß beim Sintervorgang aus diesen Zumischungen eine schmelzflüssige Phase entsteht, die die Sinterung des Werkstoffs verbessert.

## Patentansprüche

1. Rußfilter zur Abscheidung von Partikeln aus den Abgasen einer Brennkraftmaschine, der einen temperaturfesten, porösen metallischen Filterkörper aus einem metallischen Werkstoff intermetallischer Phase NiAl oder Ni₃Al aufweist, wobei der Filterkörper durch Sintern hergestellt ist,
**dadurch gekennzeichnet**,
daß der Filterkörper aus einem Drahtgeflecht besteht, und daß dem Werkstoff zur Verbesserung der Sinterfähigkeit Metalle oder Metallverbindungen beigemischt sind.

## Claims

1. A soot filter for the separation of particles from the waste gases of an internal combustion engine which has a temperature-resistant porous metal filter body in a metallic material of intermetallic phase NiAl or Ni₃Al, the filter body being made by sintering, characterized in that the filter body consists of a wire mesh and in that metals or metal compounds are mixed in with the material to improve sinterability.

## Revendications

1. Filtre à suie pour retenir des particules des gaz d'échappement d'un moteur à combustion interne, qui présente un corps de filtre métallique poreux réfractaire en matériau métallique de phase intermétallique NiAl ou Ni₃Al, le corps de filtre étant préparé par frittage, caractérisé en ce que le corps de filtre est constitué d'un tissu de fil et qu'on ajoute au matériau des métaux ou des composés métalliques pour améliorer l'aptitude au frittage.
